# NOUVEAU FASCICULE DE BREVET EUROPEEN

(11) **EP 2 755 071 B3**
(45) Date de publication du présent fascicule: **16.08.2023**
(45) Mention de la délivrance du brevet: 11.07.2018
(21) Numéro de dépôt: 13198702.6
(22) Date de dépôt: 20.12.2013
(51) Int. Cl.: G02B 6/44, G02B 6/38

(54) **Module de connexion optique**
Optisches Verbindungsmodul
Optical connection module

(30) Priorité: 11.01.2013 FR 1350261; 11.01.2013 FR 1350260
(43) Date de publication de la demande: 16.07.2014
(60) Demande divisionnaire: 17195771.5
(73) Titulaire: Nexans, 92400 Courbevoie (FR)
(72) Inventeur: Apere, Rodolphe, 78570 ANDRESY (FR); Amrouni, Hamid, 95100 Argenteuil (FR); Tronconi, Giovanni, 75016 PARIS (FR); Monatlik, Jean-Christophe, 92150 SURESNES (FR)
(74) Mandataire: Petit, Maxime

(56) Documents cités:
- US-A- 4 949 376
- US-A- 5 708 751
- US-A1- 2002 125 800
- US-A1- 2010 310 221
- US-A1- 2012 093 473

## Description

La présente invention a pour objet un module de connexion optique. Le module peut notamment être utilisé dans les réseaux FTTH et dans les points de mutualisation immeuble. L'invention concerne également un dispositif modulaire de connexion optique.

Un réseau FTTH est un réseau de télécommunication dont la partie terminale arrivant chez l'utilisateur est constituée de fibres optiques. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise).

Le point de mutualisation, ou point de flexibilité, est, sur un réseau FTTH mutualisable, l'endroit où s'effectue la connexion entre les fibres optiques des différents utilisateurs et celles des différents opérateurs. Cette connexion est typiquement un brassage réalisé à l'aide de cordons de raccordement également appelés jarretières. Le point de mutualisation peut être situé plus ou moins loin des logements qu'il dessert. Il peut s'agir d'un boîtier situé en pied d'immeuble, ou d'une armoire de rue.

L'emplacement du point de mutualisation est fonction de données techniques (capacité de passages de fibres) ou commerciales (densité). Ainsi, en zone urbaine dense le point de mutualisation sera proche de l'immeuble qu'il dessert alors qu'en zone pavillonnaire un point de mutualisation peut desservir un quartier entier.

Dans les réseaux FTTH, l'utilisateur peut choisir parmi différents opérateurs. Il existe principalement deux façons d'y parvenir.

Soit l'utilisateur possède plusieurs fibres, et il peut alors choisir la fibre correspondant à l'opérateur souhaité. Soit il n'y a qu'une fibre, et le dispositif de connexion de fibres optiques doit permettre aux différents opérateurs de se connecter à cette unique fibre. Les opérateurs supplémentaires peuvent arriver tardivement par rapport à l'installation d'origine et il convient de pouvoir distribuer les fibres optiques issues de ces nouveaux opérateurs. On utilise dans ce cas un module de connexion par opérateur, ainsi qu'un module d'utilisateurs, et la connexion est réalisée entre le module de l'opérateur et le module d'utilisateurs à l'aide d'un cordon de raccordement ou jarretière.

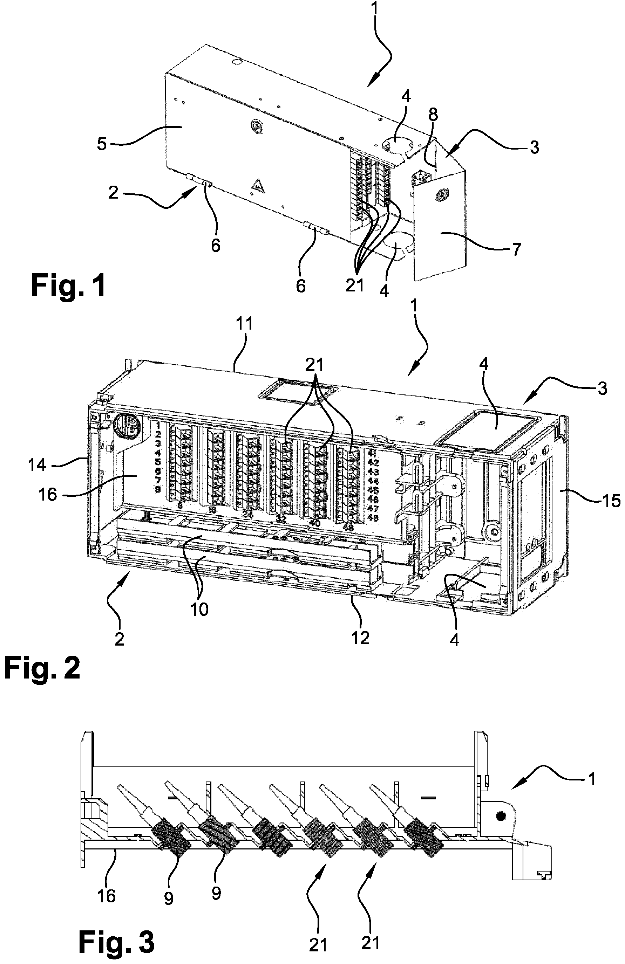

Un tel module de l'état de la technique, qu'il soit un module d'opérateur ou un module d'utilisateurs, est illustré à la figure 1. Le module 1 est un boîtier de forme parallélépipédique. Le module 1 comprend une zone de raccordement 2 d'un ensemble de fibres optiques, issues en général d'un câble, et destinée à l'opérateur ou aux utilisateurs. Dans la zone de raccordement 2, la face arrière des connecteurs 21, non représentée, est destinée à raccorder au module 1 les fibres issues du câble. La face avant des connecteurs 21, disposée sur le côté droit, est destinée à connecter les fibres issues du câble à un autre module, à l'aide d'une jarretière ou d'un cordon de raccordement. Le module 1 comprend également une zone de câblage 3, permettant un passage vertical des jarretières depuis les modules d'opérateur jusqu'au module d'utilisateurs. La zone de câblage 3 est accessible à tous et est distincte de la zone de connexion 2. La zone de câblage 3 comprend deux ouvertures 4 de câblage disposées en bas et en haut du module 1 et qui forment une cheminée de câblage traversant les différents modules.

La zone de raccordement 2 et la zone de câblage 3 devant être sécurisées, le module 1 comprend en face avant une première porte 5, destinée à fermer la zone de connexion 2, et articulée par une première charnière 6, et une deuxième porte 7, destinée à fermer la zone de câblage 3, et articulée par une deuxième charnière 8. Chaque porte 5,7 est verrouillée individuellement par une serrure.

Ce type de module a pour inconvénient que de nombreuses jarretières sont présentes dans la cheminée de câblage. Les connecteurs sont en outre difficiles d'accès et il y a un risque d'endommagement des différentes connexions et une mauvaise protection du module contre la poussière. US2012/0093473 A1 décrit un autre module de ce type présentant les caractéristiques du préambule de la revendication 1. La présente invention vise à remédier à ces inconvénients.

L'invention a ainsi pour objet un module de connexion optique, de forme parallélépipédique, comprenant un corps de module renfermant :
- une zone de raccordement, munie de connecteurs permettant de connecter des fibres optiques issues d'un ensemble de fibres optiques à des cordons de raccordement destinés à relier ledit module à d'autres modules de connexion optique, et
- une zone d'acheminement desdits cordons, permettant un passage vertical des cordons à travers le module,
le module de connexion optique comprenant également les cordons de raccordement, chaque cordon de raccordement étant destiné à être connecté à un des autres modules.

Dans le module selon l'invention, la zone de raccordement et la zone d'acheminement sont deux zones distinctes et alignées horizontalement, les connecteurs étant disposés dans un même plan vertical, ledit plan étant parallèle à la direction d'alignement de la zone de raccordement et de la zone d'acheminement, de manière à ce qu'un utilisateur puisse accéder directement aux connecteurs sans passer par la zone d'acheminement.

Ainsi, la zone de raccordement et la zone d'acheminement de cordons forment à l'intérieur du boîtier deux zones (cavités) disposées côte à côte, et non l'une derrière l'autre comme dans le module de l'état de la technique, ce qui permet à l'utilisateur d'accéder de face aux deux zones indépendamment l'une de l'autre.

Le module peut comprendre une face avant d'accès au module, une face arrière réunie à la face avant par une face inférieure, une face supérieure et deux faces latérales, les connecteurs pouvant être disposés dans un plan parallèle à la face avant, de manière à ce que les connecteurs et la zone d'acheminement apparaissent côte à côte à l'utilisateur accédant au module depuis la face avant.

Les connecteurs peuvent comprendre des raccords de forme allongée et dont l'axe longitudinal est incliné par rapport audit plan.

L'angle d'inclinaison entre les raccords et ledit plan peut être compris entre 40 et 50°.

La zone d'acheminement peut comprendre une ouverture formée dans la face inférieure et une ouverture formée dans la face supérieure.

Le module peut comprendre en outre au moins une zone de gestion de surlongueur de fibres optiques.

Le module comprend avantageusement un volet mobile constituant en position fermée une face du module et destiné à obturer la zone de raccordement et la zone d'acheminement, ledit volet étant relié au corps de module à l'aide d'une unique charnière, et le volet peut comprendre deux parties reliées entre elles par une charnière, une première partie étant destinée à recouvrir la zone de raccordement et une deuxième partie étant destinée à recouvrir la zone d'acheminement.

Ainsi, l'utilisation d'un volet unique permet d'accéder facilement au deux zones du module et de ne pas augmenter les dimensions du module lorsque le volet est ouvert.

La charnière reliant le volet au corps de module peut être réalisée entre le corps de module et la première partie destinée à recouvrir la zone de raccordement.

Le module peut comprendre des moyens de verrouillage du volet en position fermée.

La zone de raccordement comprend des connecteurs aptes à connecter les fibres optiques issues de l'ensemble de fibres optiques à des cordons de raccordement destinés à être connectés à un autre module.

Le module peut être module d'utilisateurs, destiné à connecter des fibres optiques d'utilisateur à au moins un module d'opérateur.

Le module peut être un module d'opérateur, destiné à connecter des fibres optiques d'un opérateur à un module d'utilisateurs.

La zone d'acheminement peut comprendre deux ouvertures, par exemple disposées dans une paroi inférieure et dans une paroi supérieure du corps de module, et permettant le passage de fibres optiques vers d'autres modules.

L'invention a également pour objet un dispositif modulaire de connexion optique. Le dispositif comprend une pluralité de modules décrits cidessus, les modules étant empilés verticalement les uns au-dessus des autres, de sorte que l'empilement des zones d'acheminent de cordons forme un conduit vertical d'acheminement de cordons.

Le dispositif peut comprendre des cordons de raccordement, destinés à connecter entre eux les connecteurs de différents modules, les cordons de raccordement passant dans le conduit vertical d'acheminement.

Le dispositif peut comprendre un module d'utilisateurs et plusieurs modules d'opérateurs.

Le module d'utilisateurs est typiquement disposé à l'extrémité supérieure du dispositif.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1, déjà décrite, illustre un module de connexion optique de l'état de la technique,
- la figure 2 est une vue de face d'un module de connexion optique selon l'invention,
- la figure 3 est une vue de dessus du module selon l'invention, et
- la figure 4 illustre un module selon l'invention muni d'un volet spécifique.

Tel qu'illustré à la figure 2, sur laquelle les éléments identiques à ceux de la figure 1 portent les mêmes références, un module 1 de connexion selon l'invention comprend une zone de raccordement 2 (ou zone de connexion optique) et une zone de câblage 3 adjacente à la zone de raccordement 2. Le module 1 est un boîtier, par exemple parallélépipédique, comprenant une face avant rectangulaire permettant d'accéder à l'intérieur du boîtier, par exemple une face amovible comme un volet, non représentée pour montrer l'intérieur du boîtier, une face arrière 11, la face avant et la face arrière 11 étant reliées par une face inférieure 12, une face supérieure 13 et deux faces latérales 14,15, dont une face latérale gauche 14 et une face latérale droite 15.

Le module 1 peut être un module d'utilisateurs ou un module d'opérateurs. Le module d'utilisateurs et les modules d'opérateurs sont destinés à être empilés verticalement les uns au-dessus des autres. L'empilement des zones de raccordement 3 forme une cheminée de câblage dans laquelle transitent les cordons de raccordement ou jarretières reliant chacun un module d'opérateur au module d'utilisateurs.

Le module 1 est illustré en configuration opérationnelle, le module 1 étant disposé horizontalement dans le sens de la longueur. La zone de câblage 3, destinée au passage des jarretières à travers les différents modules, comprend deux ouvertures 4 de câblage disposées dans la face inférieure 12 et dans la face supérieure 13 respectivement, et qui forment une cheminée de câblage verticale.

Les connecteurs 21 du module 1 sont disposés sur une paroi verticale 16 qui est parallèle à la face avant et à la face arrière 11, de sorte que les connecteurs 21 font face à l'utilisateur. Contrairement au module de l'état de la technique illustré à la figure 1, dans lequel les connecteurs 21 sont disposés latéralement, dans un plan orthogonal à la face avant du module 1, cette disposition face à l'utilisateur permet un bon accès aux connecteurs en combinant une facilité visuelle et une bonne ergonomie. En outre, l'extrémité des jarretières ou cordons de raccordement reliée aux contacts 21 se situe dans la zone de raccordement 2, et non dans la cheminée de câblage 3, ce qui désengorge cette dernière.

Tel qu'illustré à la figure 3, les connecteurs 21 comprennent des raccords 9 inclinés par rapport à la paroi verticale 16. La face arrière des raccords 9 permet de connecter au module 1 des fibres issues d'un câble d'acheminement de fibres. La face avant des raccords 9 permet de connecter la face arrière à une jarretière reliée à son autre extrémité à un connecteur d'un autre module. L'inclinaison des raccords 9 permet de gérer le brassage dans un espace de profondeur réduite tout en respectant les rayons de courbure souhaitables des fibres. L'angle d'inclinaison entre l'axe longitudinal des raccords 9 et la paroi verticale 16 est idéalement de 45°, et peut être compris entre 40 et 50°, voire entre 35 et 55°.

Le module 1 peut comprendre en outre des zones 10 de gestion des surlongueurs des fibres. Les zones de gestion peuvent être des bacs 10 clipsables, disposés par exemple dans la zone de raccordement 2, et notamment en partie inférieure.

Le module 1 peut être un module d'utilisateurs ou un module d'opérateurs. Le module d'utilisateurs et les modules d'opérateurs sont destinés à être empilés verticalement les uns au-dessus des autres. L'empilement des zones de raccordement 3 forme une cheminée de câblage dans laquelle transitent les jarretières reliant chacune un module d'opérateur au module d'utilisateurs.

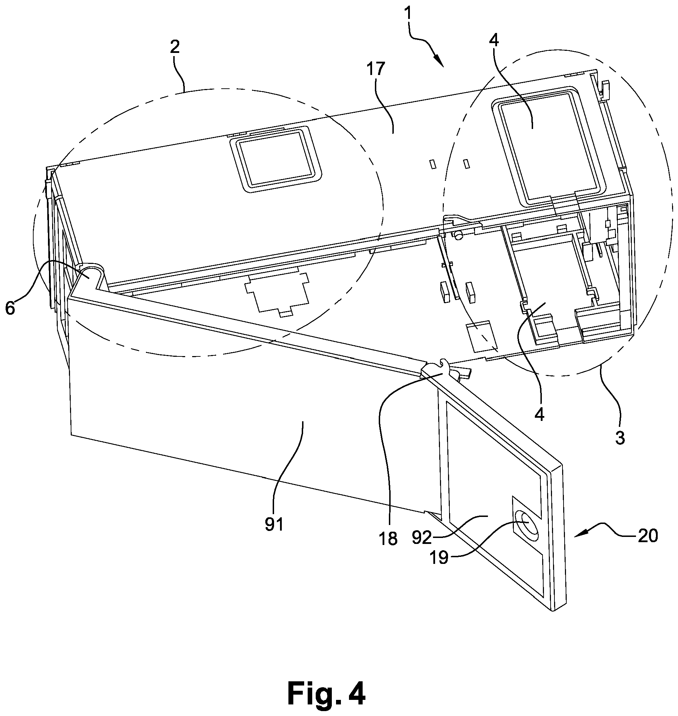

Tel qu'illustré à la figure 4, sur laquelle les éléments identiques à ceux des figure 1 à 3 portent les mêmes références, le module 1 de connexion selon l'invention est un boîtier qui peut comprendre un volet (ou porte) mobile 20, destiné à obturer et désobturer un corps 17 de module, et en particulier la zone de raccordement 2 (la zone de connexion) et la zone de câblage 3 (la zone de gestion de fibres optiques).

Le volet 20, qui est représenté à la figure 2 en position ouverte, est relié au corps 17 du module 1 par une unique charnière 6, disposée par exemple sur une arête du corps de module 17. Le volet 20 comprend deux parties 91,92. Une première partie 91 permet de recouvrir la zone de raccordement 2 tandis qu'une deuxième partie 92 permet de recouvrir la zone de câblage 3. Les deux parties 91,92 du volet 20 sont reliées par une charnière 18, ce qui permet une articulation indépendante des deux parties 91,92 du volet 20. Le volet 20 est verrouillé par une unique serrure 19 disposée sur la deuxième partie 92 du volet 20. En position fermée, le volet 20 recouvre complètement le corps de module 17.

La présence du volet 20 apporte ainsi de nombreux avantages par rapport au module de l'état de la technique illustré à la figure 1, qui a pour inconvénient d'être coûteux, du fait de l'utilisation de deux charnières 6,8 et de deux points de verrouillage et dans lequel il est en outre difficile d'accéder aux connecteurs 21, du fait de l'espace réduit. La présence du volet 20 spécifique permet au contraire un bon niveau de protection aux deux zones séparées que sont la zone de raccordement 2 et la zone de câblage 3, tout en donnant un confort d'utilisation par un accès total aux deux fonctions principales du module. On économise en outre le coût d'une serrure. Le maintien de la protection contre la poussière des points de branchement pendant l'utilisation de la cheminée de câblage est assuré, et on a une accessibilité élargie pour les fonctions principales du module. Enfin, le volume total nécessaire à l'exploitation du module dans son environnement est réduit, car le volet unique n'a pas de débattement latéral.

## Revendications

1. Module (1) de connexion optique, de forme parallélépipédique, comprenant un corps de module (17) renfermant :
- une zone de raccordement (2) munie de connecteurs (21) permettant de connecter des fibres optiques issues d'un ensemble de fibres optiques à des cordons de raccordement destinés à relier ledit module (1) à d'autres modules de connexion optique, et
- une zone d'acheminement (3) desdits cordons, permettant un passage vertical des cordons à travers le module (1),
le module de connexion optique comprenant également les cordons de raccordement, chaque cordon de raccordement étant destiné à être connecté à un des autres modules,
**caractérisé en ce que** la zone de raccordement (2) et la zone d'acheminement (3) sont deux zones distinctes et alignées horizontalement, les connecteurs (21) étant disposés dans un même plan vertical (16), ledit plan (16) étant parallèle à la direction d'alignement de la zone de raccordement (2) et de la zone d'acheminement (3), de manière à ce qu'un utilisateur puisse accéder directement aux connecteurs (21) sans passer par la zone d'acheminement (3).

2. Module (1) selon la revendication 1, **caractérisé en ce qu'**il comprend une face avant d'accès au module (1), une face arrière (11) réunie à la face avant par une face inférieure (12), une face supérieure (13) et deux faces latérales (14,15), et **en ce que** les connecteurs (21) sont disposés dans un plan (16) parallèle à la face avant, de manière à ce que les connecteurs (21) et la zone d'acheminement (3) apparaissent côte à côte à l'utilisateur accédant au module (1) depuis la face avant.

3. Module (1) selon la revendication 1 ou 2, **caractérisé en ce qu'**il comprend un volet (20) mobile constituant en position fermée une face du module (1) et destiné à obturer la zone de raccordement (2) et la zone d'acheminement (3), ledit volet (20) étant relié au corps de module (17) à l'aide d'une unique charnière (6), et **en ce que** le volet (20) comprend deux parties (91,92) reliées entre elles par une charnière (18), une première partie (91) étant destinée à recouvrir la zone de raccordement (2) et une deuxième partie (92) étant destinée à recouvrir la zone d'acheminement (3).

4. Module (1) selon la revendication 3, **caractérisé en ce que** la charnière (6) reliant le volet (20) au corps de module (17) est réalisée entre le corps de module (17) et la première partie (91) destinée à recouvrir la zone de raccordement (2).

5. Module (1) selon la revendication 3 ou 4, **caractérisé en ce qu'**il comprend des moyens de verrouillage (19) du volet (20) en position fermée.

6. Module (1) selon l'une des revendications 1 à 5, **caractérisé en ce que** le module (1) est un module d'utilisateurs, destiné à connecter des fibres optiques d'utilisateur à au moins un module d'opérateur.

7. Module (1) selon l'une des revendications 1 à 5, **caractérisé en ce que** le module (1) est un module d'opérateur, destiné à connecter des fibres optiques d'un opérateur à un module d'utilisateurs.

8. Module (1) selon l'une des revendications 1 à 7, **caractérisé en ce que** la zone d'acheminement (3) comprend une ouverture (4) formée dans la face inférieure et une ouverture (4) formée dans la face supérieure.

9. Dispositif modulaire de connexion optique, **caractérisé en ce qu'**il comprend une pluralité de modules (1) selon l'une des revendications 1 à 8, les modules (1) étant empilés verticalement les uns au-dessus des autres, de sorte que l'empilement des zones d'acheminement (3) forme un conduit vertical d'acheminement de cordons.

10. Dispositif selon la revendication 9, **caractérisé en ce qu'**il comprend des cordons de raccordement, destinés à connecter entre eux les connecteurs (21) de différents modules, les cordons de raccordement passant dans le conduit vertical d'acheminement.

11. Dispositif selon la revendication 9 ou 10, **caractérisé en ce qu'**il comprend un module d'utilisateurs et plusieurs modules d'opérateurs.

12. Dispositif selon la revendication 11, **caractérisé en ce que** le module d'utilisateurs est disposé à l'extrémité supérieure du dispositif.

## Patentansprüche

1. Optisches Verbindungsmodul (1), die eine parallelflache Form aufweist und einen Körper (17) umfasst, der enthält:
- ein Koppelfeld (2), das mit Verbindern (21) ausgestattet ist, die es ermöglichen, Lichtwellenleiter aus einer Gruppe von Lichtwellenleitern an Verbindungskabel zur Verbindung des Moduls (1) mit anderen optischen Verbindungsmodulen anzuschließen, und
- einen Durchgangsbereich (3) der Kabel, der einen vertikalen Durchgang der Kabel durch das Modul (1) ermöglicht,
wobei das optische Verbindungsmodul ebenfalls Verbindungskabel umfasst, wobei jedes Verbindungskabel an einem der anderen Module angeschlossen sein soll,
**dadurch gekennzeichnet, dass** das Koppelfeld (2) und der Durchgangsbereich (3) zwei unterschiedliche Bereiche sind und horizontal ausgerichtet sind, wobei die Verbinder (21) auf einer einzigen vertikalen Ebene (16) angeordnet sind, wobei die Ebene (16) parallel zur Ausrichtung des Koppelfelds (2) und des Durchgangsbereichs (3) verläuft, so dass ein Benutzer unmittelbar auf die Verbinder (21) zugreifen kann, ohne den Durchgangsbereich (3) passieren zu müssen.

2. Modul (1) nach Anspruch 1, **dadurch gekennzeichnet, dass** es eine Vorderseite zum Zugreifen auf das Modul (1), eine über eine Unterseite (12) mit der Vorderseite verbundene Rückseite (11), eine Oberseite (13) und zwei Lateralseiten (14, 15) umfasst, und dass die Verbinder (21) auf einer Ebene (16) angeordnet sind, die parallel zur Vorderseite verläuft, so dass die Verbinder (21) und der Durchgangsbereich (3) dem von der Vorderseite aus auf das Modul (1) zugreifenden Benutzer gegenüber nebeneinander erscheinen.

3. Modul (1) nach Anspruch 1 oder 2, **dadurch gekennzeichnet, dass** es einen beweglichen Laden (20) umfasst, der in der geschlossenen Stellung eine Seite des Moduls (1) darstellt und das Koppelfeld (2) und den Durchgangsbereich (3) abschließen soll, wobei der Laden (20) über ein einziges Gelenk (6) mit dem Körper (17) verbunden ist, und der Laden (20) zwei über ein Gelenk (18) miteinander verbundene Teile (91, 92) umfasst, wobei ein erster Teil (91) das Koppelfeld (2) decken soll und ein zweiter Teil (92) den Durchgangsbereich (3) decken soll.

4. Modul (1) nach Anspruch 3, **dadurch gekennzeichnet, dass** das Gelenk (6), das den Laden (20) mit dem Körper (17) verbindet, zwischen dem Körper (17) und dem ersten Teil (91), der das Koppelfeld (2) decken soll, ausgebildet ist.

5. Modul (1) nach Anspruch 3 oder 4, **dadurch gekennzeichnet, dass** es Mittel (19) zur Verriegelung des Ladens (20) in der geschlossenen Stellung umfasst.

6. Modul (1) nach einem der Ansprüche 1 bis 5, **dadurch gekennzeichnet, dass** das Modul (1) ein Benutzermodul ist, das Lichtwellenleiter eines Benutzers an mindestens ein Bedienermodul anschließen soll.

7. Modul (1) nach einem der Ansprüche 1 bis 5, **dadurch gekennzeichnet, dass** das Modul (1) ein Bedienermodul ist, das Lichtwellenleiter eines Benutzers an mindestens ein Benutzermodul anschließen soll.

8. Modul (1) nach einem der Ansprüche 1 bis 7, **dadurch gekennzeichnet, dass** der Durchgangsbereich (3) eine in der Unterseite ausgebildete Öffnung (4) und eine in der Oberseite ausgebildete Öffnung (4) umfasst.

9. Modulare optische Verbindungsvorrichtung, **dadurch gekennzeichnet, dass** sie eine Mehrzahl Module (1) nach einem der Ansprüche 1 bis 8 umfasst, wobei die Module (1) vertikal aufeinandergestapelt sind, so dass die gestapelten Durchgangsbereiche (3) eine vertikale Durchgangsleitung für Kabel bildet.

10. Vorrichtung nach Anspruch 9, **dadurch gekennzeichnet, dass** sie Verbindungskabel zum Anschluss der Verbinder (21) verschiedener Module untereinander umfasst, wobei die Verbindungskabel durch die vertikale Durchgangsleitung verlaufen.

11. Vorrichtung nach Anspruch 9 oder 10, **dadurch gekennzeichnet, dass** sie ein Benutzermodul und mehrere Bedienermodule umfasst.

12. Vorrichtung nach Anspruch 11, **dadurch gekennzeichnet, dass** das Benutzermodul am oberen Ende der Vorrichtung angeordnet ist.

## Claims

1. An optical connection module (1), with a parallelepiped shape, comprising a module body (17) containing:
- a connecting zone (2) provided with connectors (21) making it possible to connect optical fibers coming from a set of optical fibers with patch cables intended to connect said module (1) to other optical connecting modules, and
- a conveying zone (3) of said cables, allowing a vertical passage of the cables through the module (1),
the optical connection module also comprising the patch cables, each patch cable being intended to be connected to one of the other modules,
**characterized in that** the connecting zone (2) and the conveying zone (3) are two separate zones and aligned horizontally, the connectors (21) being arranged in a same vertical plane (16), said plane (16) being parallel to the alignment direction of the connecting zone (2) and the conveying zone (3), such that a user can directly access the connectors (21) without going through the conveying zone (3).

2. The module (1) according to claim 1, **characterized in that** it comprises a front face for accessing the module (1), a rear face (11) joined to the front face by a lower face (12), an upper face (13) and two side faces (14, 15), and **in that** the connectors (21) are arranged in a plane (16) parallel to the front face, such that the connectors (21) and the conveying zone (3) appear side by side to the user accessing the module (1) from the front face.

3. The module (1) according to claim 1 or 2, **characterized in that** it comprises a movable flap (20) constituting, in the closed position, a face of the module (1) and intended to close off the connecting zone (2) and the conveying zone (3), said flap (20) being connected to the module body (17) using a single hinge (6), and **in that** the flap (20) comprises two parts (91, 92) connected to one another by a hinge (18), a first part (91) being intended to cover the connecting zone (2) and a second part (92) being intended to cover the conveying zone (3).

4. The module (1) according to claim 3, **characterized in that** the hinge (6) connecting the flap (20) to the module body (17) is made between the module body (17) and the first part (91) intended to cover the connecting zone (2).

5. The module (1) according to claim 3 or 4, **characterized in that** it comprises means (19) for locking the flap (20) in the closed position.

6. The module (1) according to one of claims 1 to 5, **characterized in that** the module (1) is a user module, intended to connect user optical fibers to at least one operator module.

7. The module (1) according to one of claims 1 to 5, **characterized in that** the module (1) is an operator module, intended to connect optical fibers of an operator to a user module.

8. The module (1) according to one of claims 1 to 7, **characterized in that** the conveying zone (3) comprises an opening (4) formed in the lower face and an opening (4) formed in the upper face.

9. A modular optical connection device, **characterized in that** it comprises a plurality of modules (1) according to one of claims 1 to 8, the modules (1) being stacked vertically above one another, such that the stack of conveying zones (3) forms a vertical conduit for conveying cables.

10. The device according to claim 9, **characterized in that** it comprises patch cables, intended to connect the connectors (21) of different modules to one another, the patch cables passing in the vertical conveying conduit.

11. The device according to claim 9 or 10, **characterized in that** it comprises a user module and several operator modules.

12. The device according to claim 11, **characterized in that** the user module is arranged at the upper end of the device.
